# FASCICULE DE BREVET EUROPEEN

(11) **EP 2 101 909 B1**
(45) Date de publication et mention de la délivrance du brevet: **30.05.2012**
(21) Numéro de dépôt: 07871816.0
(22) Date de dépôt: 07.12.2007
(51) Int. Cl.: B01J 8/24, C10G 11/18, B01D 45/06, B01D 45/16

(54) **NOUVEAU SYSTEME DE SEPARATION GAZ SOLIDE POUR LES REGENERATEURS DES UNITES DE CRAQUAGE CATALYTIQUE EN LIT FLUIDISE**
NEUES FESTSTOFF-GAS-TRENNUNGSSYSTEM FÜR REGENERATOREN VON FLUID-CATALYTIC-CRACKING-EINHEITEN
NOVEL SOLID GAS SEPARATION SYSTEM FOR FLUID CATALYTIC CRACKING UNIT REGENERATORS

(30) Priorité: 13.12.2006 FR 0610982
(43) Date de publication de la demande: 23.09.2009
(73) Titulaire: IFP Energies nouvelles, 92852 Rueil-Malmaison Cedex (FR); Total France, 92907 Paris La Défense Cedex (FR)
(72) Inventeur: ANDREUX, Régis, F-31100 Toulouse (FR); GAUTHIER, Thierry, F-69530 Brignais (FR); LE COZ, Jean-François, F-78100 Saint Germain En Laye (FR); LEROY, Patrick, F-76430 Saint Vigor D'Ymonville (FR); DELSART, Olivier, F-76600 Le Havre (FR)
(86) Numéro de dépôt international: PCT/FR2007/002021
(87) Numéro de publication internationale: WO 2008/087272

(56) Documents cités:
- EP-A- 1 800 742
- EP-A1- 0 532 071
- WO-A-99/11739
- US-A- 4 664 888
- US-A1- 2005 029 163

## Description

### Domaine de l'invention

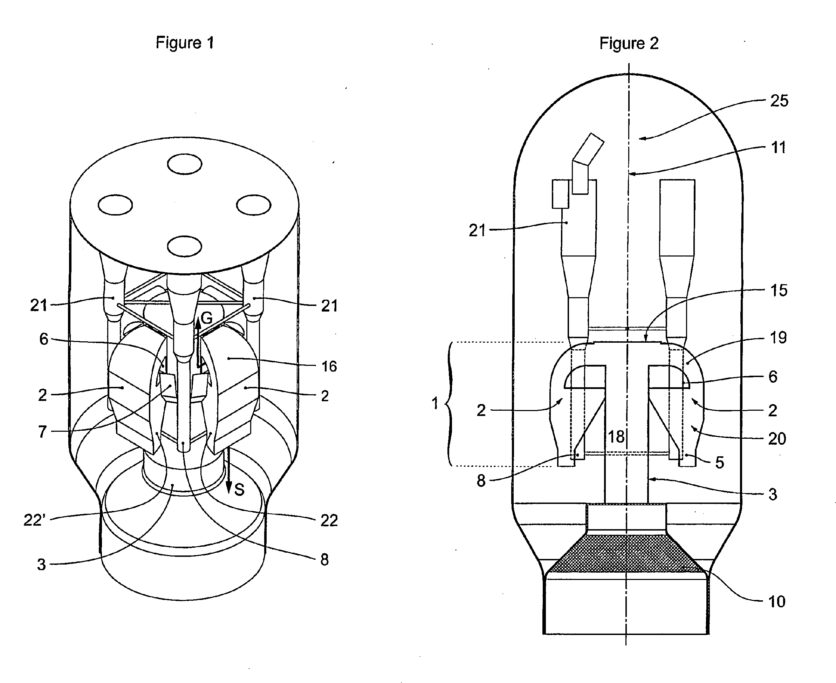

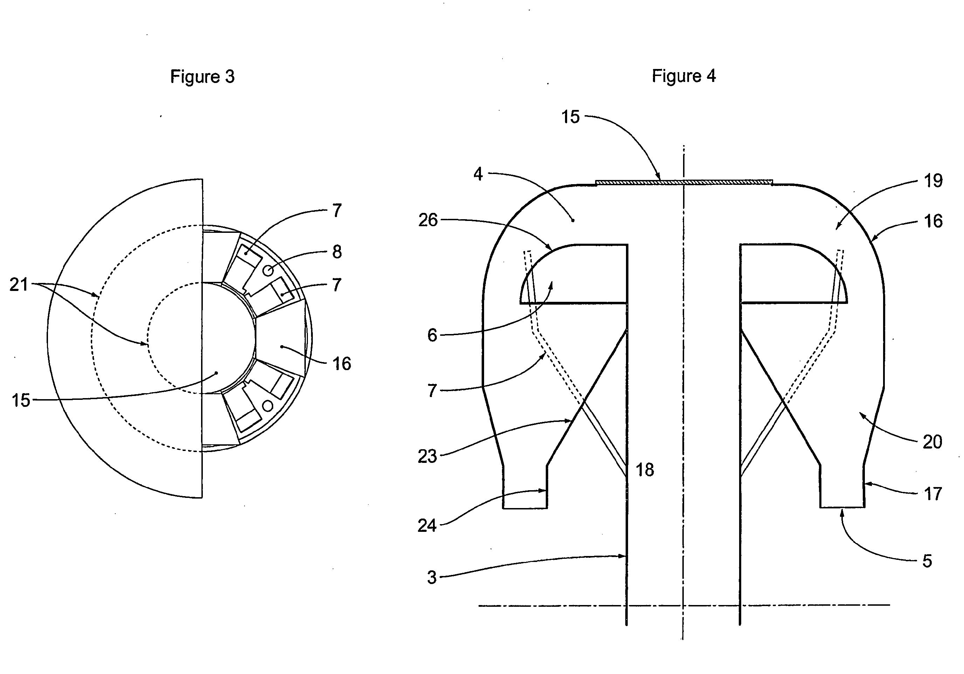

L'invention concerne un dispositif de séparation applicable en tête des régénérateurs des unités de craquage catalytique en lit fluidisé ( abréviation FCC). La zone de régénération des unités de craquage catalytique peut être réalisée en un seul étage ou être divisée en deux étages. A titre d'exemple on peut citer comme technologie à un étage le "flexicracker" d'EXXON qui fonctionne en lit fluidisé dense, ou la technologie FCC d'UOP qui fonctionne en lit entraîné. Comme exemple de zone de régénération à deux étages, on peut citer la technologie R2R de la société AXENS/SWEC. On pourra trouver une représentation schématique de ces différentes technologies dans l'ouvrage "Fluid Catalytic Handbook" de Reza Sadeghbeigi publié aux éditions "Gulf Professional Publishing" aux pages 2 et 3 ( figures 1-1; 1-2; 1-3).

Dans la suite du texte, on appellera dispositif de séparation, objet de la présente invention, le dispositif permettant la séparation primaire du catalyseur des gaz de combustion, situé dans le ou les étages de la zone de régénération en amont d'un ou de plusieurs étages de séparation secondaire, généralement réalisés au moyen d'étages de cyclones.

Que la zone de régénération soit réalisée en un étage ou en deux étages, elle doit posséder au moins un dispositif de séparation entre les gaz de combustion et le catalyseur régénéré par étage. Rappelons que la zone de régénération des unités de FCC est une zone à l'état fluidisé dans laquelle est réalisée la combustion contrôlée du coke déposé à la surface du catalyseur en provenance de la zone réactionnelle, de manière à retrouver en sortie de ladite zone de régénération un niveau de coke très faible avant de renvoyer le catalyseur régénéré dans la zone réactionnelle. Typiquement, le niveau de coke en entrée de la zone de régénération est compris entre 0,3 % et 2,0% poids, le plus souvent entre 0,5% et 1,5% poids, et se retrouve en sortie de ladite zone inférieur à 0,05 % poids.

L'objectif du dispositif de séparation du catalyseur et des gaz de combustion est d'abaisser la concentration en particules solide dans les effluents gazeux introduits dans l'étage de cyclones situés en aval, l'efficacité de séparation des particules étant, selon la présente invention, d'au moins 90 % et préférentiellement d'au moins 95%. Cette valeur représente un gain très important par rapport aux valeurs obtenues avec les dispositifs de l'art antérieur, du type croix de désengagement, tels en particulier que celui représenté sur la figure 1-2 citée plus haut, dont l'efficacité ne dépasse pas 60 à 70 %. Le dispositif selon la présente invention permet de par son efficacité accrue, de supprimer un des étages de cyclones situés en aval. Il en résulte un gain substantiel en compacité, surtout lorsque les étages de cyclones sont situés à l'intérieur de la zone de régénération.

Rappelons que le rapport des débits massiques solide sur gaz dans l'écoulement gaz solide en entrée de la zone de séparation est généralement compris entre 2 et 50, et préférentiellement compris entre 3 et 10.

### Examen de l'art antérieur

L'art antérieur concernant les systèmes de séparation entre le catalyseur régénéré et les gaz de combustion est le plus souvent représenté par des dispositifs simples consistant en un changement de direction brutal de la suspension gaz solide avec généralement une sortie unique pour le gaz et pour le solide. Le type standard de ces dispositifs de désengagement est la croix de désengagement qui consiste en un ensemble de bras situés dans le prolongement, et selon une direction sensiblement perpendiculaire à la conduite verticale d'amenée de la suspension gaz solide, chaque bras étant muni d'une ouverture de sortie dirigée vers le bas. L'efficacité de tels systèmes est en général comprise entre 60 et 70 % poids, c'est à dire plus précisément qu'après l'évacuation de la suspension gaz solide par les ouvertures de sortie, environ 60 % du solide rejoint la phase dense du lit fluidisé situé au dessous, alors que 40% dudit solide en suspension dans le gaz va alimenter l'étage de cyclones situé en aval du dispositif.

On peut citer comme art antérieur pertinent le, document WO 99/11739 A qui décrit un dispositif de séparation gaz solide en aval d'une unité de FCC. Le dispositif comporte un ensemble de chambres de séparation réparties en chapelle autour d'un axe vertical et comportant une paroi horizontale (21), une paroi curviligne adjacente à la paroi horizontale et faisant le raccord avec une paroi verticale (22)( les numéros se rapportent à la figure 1 du document cité).

Ce document ne décrit pas la présence de déflecteurs ni le fait que les jambes de retour des cyclones s'intercalent entre les chambres de séparation. On peut également mentionner le document EPA1 0 532071 qui décrit un dispositif de séparation gaz solide comprenant un moyen permettant de modifier la trajectoire de la suspension gaz solide. Au vue des figures et de la description, ce moyen consiste essentiellement en deux surfaces de forme semi circulaire qui permettent à la suspension de passer d'une direction initiale verticale ascendante à une direction descendante. Ce moyen de déflection est donc très différent des déflecteurs décrits dans la présente demande.

### Description sommaire des figures

L'ensemble des figures jointes s'appliquent aussi bien à la configuration d'une zone de régénération en un seul étage , qu'en deux étages.
La figure 1 représente une vue en perspective du dispositif selon l'invention qui permet de visualiser la position relative dudit dispositif et du système de séparation secondaire constitué d'un étage de cyclones situé en aval.
La figure 2 représente une vue de profil du dispositif selon l'invention. Elle permet de visualiser la configuration d'une chambre de séparation.
La figure 3 représente une vue de dessus du dispositif selon l'invention comprenant un système de séparation secondaire constitué d'un étage de cyclones. Elle permet de visualiser la position des jambes de retour des cyclones par rapport aux chambres de séparation.
La figure 4 représente une vue plus particulière des déflecteurs et de leur position par rapport aux chambres de séparation et aux jambes de retour des cyclones. Pour ne pas alourdir la figure, l'orifice qui équipe la partie inférieure des déflecteurs n'est pas représenté.

### Description sommaire de l'invention

La présente invention consiste en un dispositif de séparation de particules solide contenues dans un flux gazeux provenant de la zone de régénération d'une unité de craquage catalytique en lit fluidisé (FCC) délimité par une enveloppe interne (3) de forme cylindrique centrée selon l'axe vertical de la zone de régénération, et une enveloppe externe (1) présentant une paroi sensiblement horizontale (15), suivie d'une paroi curviligne (16), et d'une paroi sensiblement verticale (17), l'ensemble desdites parois (15,16,17) recouvrant l'enveloppe interne (3) et formant un ensemble de chambres de séparation (2) réparties en chapelles autour de l'enveloppe interne (3) dans lequel circule la suspension gaz solide à séparer.

Une chambre de séparation (2) possède donc une première paroi verticale commune avec la paroi verticale de l'enveloppe interne (3), une seconde paroi curviligne constituée de la réunion des parois (15), (16) et (17) et deux parois latérales (22), (22') sensiblement perpendiculaires à l'enveloppe cylindrique (3).

Chaque chambre de séparation (2) communique d'une part par les sections d'entrée (4) avec l'enveloppe cylindrique interne (3), et d'autre part par les sections de sortie (5) avec la zone de régénération (25), et possède au moins une sortie latérale (6) située dans la partie supérieure de la paroi latérale (22) et/ou (23) de ladite chambre de séparation. La sortie latérale (6) est définie par l'espace compris entre la portion de paroi verticale de l'enveloppe interne (3) située immédiatement au dessous de la section d'entrée (4) et l'intrados (26) correspondant à la paroi curviligne (16) de l'enveloppe externe (1).

La forme de la sortie latérale (6) sera approximativement celle d'un quart de cercle ou d'ellipse. On entend par approximativement le fait que toute forme permettant un enroulement de la suspension gaz solide autour de la paroi curviligne (16) et de l'intrados correspondant (26) convient à la présente invention. La forme exacte de la sortie latérale (6) résulte de la forme de l'intrados (26) correspondant à ladite paroi curviligne (16).

Le dispositif selon l'invention comporte des déflecteurs (7) situés entre deux chambres de séparation successives (2), chaque déflecteur étant fixé à la paroi de l'enveloppe cylindrique interne (3) et ayant préférentiellement une forme d'aile dirigée vers le haut, l'extrémité supérieure de l'aile étant située à un niveau inférieur au niveau supérieur des sorties latérales (6). Ces déflecteurs (7) sont munis dans leur partie inférieure d'au moins un orifice ( non représenté sur les figures) permettant l'évacuation du catalyseur qui pourrait s'accumuler dans l'angle formé entre la partie inférieure dudit déflecteur (7) et la paroi cylindrique interne (3).

On reste dans le cadre de la présente invention en donnant aux déflecteurs (7) toute forme permettant de canaliser la remontée du gaz issu des sorties latérales (6). La forme en aile dirigée vers le haut est la forme préférée, mais des formes coniques ou plus généralement tubulaires ( c'est à dire un ensemble de tubes convenablement inclinés) restent parfaitement dans le cadre de la présente invention. Des informations complémentaires sur les déflecteurs (7) sont données dans la description détaillée.

Le dispositif selon l'invention présente une symétrie cylindrique autour de l'axe vertical de la zone de régénération (25). En particulier les jambes de retour (8) des cyclones (21) constituant l'étage de séparation secondaire s'intercalent entre les chambres de séparation (2) et plongent jusqu'à un niveau qui peut être situé soit au dessus du niveau du lit fluidisé dense, soit être situé à l'intérieur même du lit fluidisé dense. On parle dans ce dernier cas de jambe immergée. De manière préférée, les jambes de retour (8) déboucheront dans la phase diluée surmontant le lit dense.

Les jambes de retour (8) pourront former un certain angle par rapport à la verticale. Un angle maximal de 20°, et préférentiellement un angle maximal de 15° par rapport à la verticale, sera admissible pour le bon fonctionnement des jambes de retour (8). De manière particulièrement préférée, les jambes de retour (8) seront sensiblement verticales, c'est à dire pourront s'écarter de la verticale d'un angle d'au plus 5°.

Enfin, les jambes de retour pourront être munies à leur extrémité inférieure de systèmes mécaniques permettant d'éviter la remontée des bulles à l'intérieur desdites jambes, et de bien distribuer la suspension gaz solide vers l'extérieur de la jambe. Ces systèmes seront de tout type connus de l'homme du métier, en particulier des chapeaux de forme diverse, chapeaux chinois en particulier, voire même de simple plaque horizontale séparée de l'extrémité inférieure de la jambe (8) d'une distance comprise entre 0,5 fois et 1,5 fois le diamètre de ladite jambe de retour.

Le dispositif selon l'invention permet une séparation efficace des particules de catalyseur régénéré, avant leur réintroduction dans la zone réactionnelle de l'unité de craquage catalytique. L'efficacité de la séparation gaz solide est d'au moins 90 %, et plus souvent de 95 %, ce qui présente en outre l'avantage de permettre aux cyclones constituant l'étage de séparation secondaire de travailler à des niveau de concentration en particules moindre, donc dans des conditions optimales.

La perte de charge du dispositif selon l'invention est en général un peu supérieure à celle d'un dispositif selon l'art antérieur, ce qui n'est pas pénalisant dans la mesure où ce poste est peu important dans le bilan pression de l'unité.

### Description détaillée de l'invention

Les numérotations entre parenthèses dans le texte correspondent aux numérotations sur les figures 1 à 4. Le dispositif de séparation selon la présente invention est applicable aux unités de craquage catalytique en lit fluidisé présentant une zone de régénération à un ou deux étages. Dans le cas d'une zone de régénération à deux étages, les deux étages sont reliés par une zone tubulaire de forme sensiblement verticale et allongée appelé "lift" dans la terminologie anglo-saxonne que nous traduirons par tube de transport et noté (18) sur la figure 2.

Dans le cas où la zone de régénération ne comporte qu'un étage, le dispositif selon l'invention se place dans la partie supérieure du lit fluidisé constituant ledit étage en continuité avec les parois du réacteur en lit fluidisé. Cette continuité est généralement assurée par une zone de transition conique (10) qui permet de passer progressivement du diamètre du réacteur au diamètre de la conduite verticale cylindrique (18).

Comme il n'y a pas de différence de fonctionnement au niveau du dispositif selon l'invention, selon qu'il est implanté dans une zone de régénération à un étage ou deux étages, on ne distinguera pas dans la suite du texte la conduite cylindrique verticale (18) qui correspond selon le cas, soit au tube de transport ( cas d'une zone de régénération à deux étages), soit à la partie supérieure du lit fluidisé ( cas d'une zone de régénération à un étage)

De manière générale, on parlera de zone de régénération pour désigner l'enceinte comprenant le lit fluidisé au sein duquel s'effectue la réaction de combustion du coke, le dispositif de séparation primaire selon la présente invention, et le dispositif de séparation secondaire constitué généralement d'un ou plusieurs étages de cyclones.

La description qui suit concerne aussi bien le cas d'une zone de régénération à 2 étages, qu'une zone de régénération à un étage, la zone de transition conique (10) pouvant dans certains cas être supprimée.

Le dispositif selon la présente invention comprend une première enveloppe cylindrique interne (3) de forme cylindrique en continuité avec les parois de la zone de régénération lorsque celle ci est constituée d'un seul étage ou en continuité avec les parois du tube de transport lorsque la zone de régénération comporte deux étages. Dans les deux cas, la continuité est assurée par l'intermédiaire d'une zone de transition de forme cylindro-conique (10) permettant de passer du diamètre du réacteur ou du tube de transport à celui de l'enveloppe cylindrique interne (3).

L'enveloppe de la zone de régénération (25) contient à la fois le dispositif selon la présente invention, le système de séparation secondaire généralement constitué d'au moins un étage de cyclones (21), et le lit fluidisé dense à l'intérieur duquel se réalise la combustion contrôlée du coke déposé sur le catalyseur.

L'enveloppe cylindrique interne (3) est centrée selon l'axe de symétrie vertical de la zone de régénération (25). L'enveloppe cylindrique interne (3) est coiffée par une enveloppe externe (1) comportant une première paroi sensiblement horizontale (15) et des parois latérales ayant une forme d'abord incurvée (16), puis sensiblement parallèle (17) aux parois verticales de l'enveloppe interne (3).

L'enveloppe externe (1) ne forme pas une surface unique recouvrant la totalité de l'enveloppe interne (3) mais, comme le montre la figure (1), est divisée en un certain nombre de secteurs égaux dont la paroi externe ( 15; 16; 17) combinée avec la portion correspondante de la paroi verticale de l'enveloppe interne (3) détermine une chambre de séparation (2).

Une chambre de séparation (2) est donc délimitée par deux parois latérales (22), (22') définissant un secteur. Le nombre de chambres de séparation est compris entre 2 et 6, et sera préférentiellement de 4.

Une chambre de séparation (2) comporte trois zones qu'on peut décrire de la manière suivante dans le sens d'écoulement de la suspension gaz solide:
- une première zone (18) dans laquelle l'écoulement est sensiblement vertical et ascendant,
- une seconde zone dite zone de centrifugation (19) dans laquelle la suspension gaz solide subit un retournement d'environ 180°, et
- une troisième zone verticale descendante (20) qui permet au solide d'être évacué au dehors du dispositif de séparation par les sections de sortie (5) pour rejoindre la partie inférieure de la zone de régénération (25). Cette partie inférieure est principalement occupée par le lit fluidisé dense à l'intérieur duquel s'effectue la réaction de combustion contrôlée du coke déposé sur le catalyseur. Le niveau de ce lit fluidisé dense est inférieur d'au moins un mètre au niveau des sections de sortie (5).

Une chambre de séparation (2) communique dans sa partie supérieure avec la zone cylindrique (18) par l'intermédiaire de la section de passage (4) délimitée d'une part par l'extrémité supérieure de l'enveloppe cylindrique interne (3) et d'autre part par la paroi supérieure (15) et (16) de l'enveloppe externe. Une chambre de séparation (2) communique dans sa partie inférieure avec la zone de régénération (25) par la section de sortie (5) délimitée d'une part par la paroi verticale de l'enveloppe cylindrique interne (3) ou par une paroi voisine de cette dernière mais séparée d'elle (23), (24), et d'autre part par la paroi verticale (17) de l'enveloppe externe (1).

Les expressions section d'entrée (4) et section de sortie (5) sont à comprendre au sens de l'écoulement de la suspension gaz solide qui entre dans la zone de centrifugation par la section d'entrée (4), et sort du dispositif de séparation par la section de sortie (5).

Les chambres de séparation (2) sont réparties en chapelles autour de la zone cylindrique verticale (18) définie par l'enveloppe cylindrique interne (3).

Chaque chambre de séparation (2), comporte en sa partie supérieure, une ouverture (6) mettant en communication la partie supérieure de la zone de régénération (25), et avec la zone de centrifugation (19) et permettant au gaz de se désengager alors que les particules solide de la suspension gaz solide restent à l'intérieur de ladite chambre de séparation en étant dirigées vers la zone verticale descendante (20).

La zone de centrifugation (19) est définie de manière à permettre la mise en rotation dans un plan sensiblement vertical de la suspension gaz solide suivant un angle d'environ 180 degrés par rapport à la verticale.

Les particules solide qui ont un mouvement sensiblement vertical et ascendant à l'entrée de la zone de centrifugation (19) en provenance de la section d'entrée (4), se retrouvent en sortie de la dite zone de centrifugation (19) avec un mouvement sensiblement vertical et descendant qui se prolonge à l'intérieur de la zone verticale descendante (20) jusqu'à la section de sortie des particules (5).

Le désengagement du gaz à travers l'ouverture (6) est favorisé par des déflecteurs (7) fixés à la paroi verticale de l'enveloppe interne (3) et muni d'au moins un orifice à leur partie inférieure au voisinage de l'angle formé par ladite partie inférieure et la paroi verticale cylindrique (3). Plus précisément, ces déflecteurs (7) sont situés entre les chambres de séparation (2) tout en permettant le passage des jambes de retour (8) des cyclones (21). Chaque déflecteur (7) a préférentiellement une forme d'aile dirigée vers le haut, l'extrémité supérieur de l'aile étant située à un niveau inférieur au niveau supérieur de l'ouverture latérale (16).

Chaque déflecteur (7) possède une partie inférieure inclinée fixée à la paroi de l'enveloppe cylindrique interne (3), l'angle d'inclinaison étant compris entre 15 et 30 degré par rapport à la verticale. Cette partie inférieure est percée d'au moins un orifice pour permettre l'évacuation du catalyseur qui pourrait éventuellement s'accumuler dans l'angle formé par ladite partie inférieure et la paroi verticale cylindrique (3).

Chaque déflecteur (7) possède une partie supérieure sensiblement verticale située à au moins 150 mm par rapport à la paroi verticale de l'enveloppe cylindrique interne (3).

Les chambres de séparation (2), les déflecteurs (7) et les jambes de retour (8) des cyclones sont au nombre de 2, 4 ou de 6 et forment un ensemble respectant la symétrie selon l'axe vertical (11) de la zone de régénération (25).

Préférentiellement le nombre de chambre de séparation sera de 2 ou de 4.

La vitesse de circulation de la suspension gaz solide dans la conduite verticale (18) est généralement comprise entre 5 et 30 m/s et préférentiellement comprise entre 12 et 25 m/s. Les sections d'entrée (4) sont calculées de manière à respecter sensiblement la vitesse de circulation telle qu'elle existe dans la conduite verticale (18). Par exemple, dans l'hypothèse d'un dispositif à 4 chambres de séparation (2), les sections d'entrée (4) auront une valeur sensiblement égale au quart de la section de la conduite verticale (18).

Le rapport de débit massique entre le solide et le gaz est généralement compris entre 2 et 40, et préférentiellement compris entre 4 et 25.

La vitesse de sortie du gaz au niveau des sorties latérales (6) est comprise entre 5 et 20 m/s et préférentiellement comprise entre 5 et 12 m/s.

Une certaine quantité de gaz est également évacuée par les sections de sortie (5). Cette fraction de gaz peut représenter entre 20% et 70% du gaz total, et sa valeur dépend essentiellement du rapport de surface entre les sections (5) et (6).

Le flux de particules solide évacuées par les sections de sortie (5) est généralement compris entre 50 Kg/(m².s) et 1500 Kg/(m².s), et préférentiellement entre 100 Kg/(m².s) et 500 Kg/(m².s) pour des particules de catalyseur de FCC standards dont la masse volumique de grain est comprise entre 1500 Kg/m3 et 2000 Kg/m3, et dont le diamètre moyen est compris entre 60 et 80 microns.

## Revendications

1. Dispositif de séparation de particules solide contenues dans un flux gazeux provenant de la zone de régénération d'une unité de craquage catalytique en lit fluidisé ( FCC) délimité par une enveloppe interne (3) de forme cylindrique centrée selon l'axe vertical (11) de la zone de régénération (25), et une enveloppe externe (1) présentant une paroi sensiblement horizontale (15), une paroi curviligne (16), et une paroi sensiblement verticale (17), l'ensemble desdites parois (15, 16, 17) recouvrant l'enveloppe interne (3) et formant un ensemble de chambres de séparation (2) réparties en chapelles autour de l'enveloppe interne (3) dans lequel circule la suspension gaz solide à séparer, chaque chambre de séparation (2) communiquant d'une part par les sections d'entrée (4) avec l'enveloppe cylindrique interne (3), et d'autre part par les sections de sortie (5) avec la partie inférieure de la zone de régénération (25), et possédant au moins une sortie latérale (6) située dans la partie supérieure de la paroi latérale (22) de la chambre de séparation (2), ladite sortie latérale (6) étant définie par l'espace compris entre la portion de paroi verticale de l'enveloppe interne (3) située immédiatement au dessous de la section d'entrée (4) et l'intrados (26) correspondant à la paroi curviligne (16) de l'enveloppe externe (1), ledit dispositif comporte en outre des déflecteurs (7) situés entre deux chambres de séparation (2) successives, chaque déflecteur (7) étant muni d'au moins un orifice situé à sa partie inférieure, et étant fixé à la paroi de l'enveloppe cylindrique interne (3), chaque déflecteur (7) ayant une forme d'aile dirigée vers le haut, l'extrémité supérieur de l'aile étant située à un niveau inférieur au niveau supérieur de l'ouverture latérale (16), et les jambes de retour (8) des cyclones (21) constituant l'étage de séparation secondaire, s'intercalent entre les chambres de séparation (2), et s'alignent selon un cercle de diamètre compris entre le diamètre de l'enveloppe cylindrique interne (3) et le diamètre le plus grand de l'enveloppe externe (1),

2. Dispositif selon la revendication 1, dans lequel chaque déflecteur (7) possède une partie inférieure inclinée fixée à la paroi de l'enveloppe cylindrique interne (3), l'angle d'inclinaison étant compris entre 15 et 30 degré par rapport à la verticale.

3. Dispositif selon l'une des revendications 1 à 2, dans lequel chaque déflecteur (7) possède une partie supérieure sensiblement verticale située à au moins 150 mm par rapport à la paroi verticale de l'enveloppe cylindrique interne (3).

4. Dispositif selon l'une des revendications 1 à 3, dans lequel les chambres de séparation (2), les déflecteurs (7) et les jambes de retour (8) des cyclones sont au nombre de 2 ou de 4 et forment un ensemble respectant la symétrie selon l'axe vertical (11) de la zone de régénération (25).

5. Dispositif selon l'une des revendications 1 à 4, dans lequel le niveau du lit fluidisé dense situé dans la partie inférieure de la zone de régénération (25) est inférieur d'au moins un mètre au niveau des sections de sortie (5).

6. Procédé de séparation de particules solides contenues dans une suspension gaz solide utilisant le dispositif selon l'une quelconque des revendications 1 à 5, dans lequel la vitesse de circulation de la suspension gaz solide dans les sections d'entrée (4) est comprise entre 5 m/s et 30 m/s, et préférentiellement comprise entre 8 m/set 20 m/s.

7. Procédé de séparation de particules solides contenues dans une suspension gaz solide utilisant le dispositif selon l'une quelconque des revendications 1 à 5, dans lequel le rapport de débit massique entre le solide et le gaz au niveau des sections d'entrée (4) est compris entre 2 et 40, et préférentiellement compris entre 4 et 25.

8. Procédé de séparation de particules solides contenues dans une suspension gaz solide utilisant le dispositif selon l'une quelconque des revendications 1 à 5, dans lequel la vitesse de sortie du gaz au niveau des ouvertures latérales (6) est comprise entre 5 et 30 m/s, et préférentiellement comprise entre 5 m/s et 12 m/s.

9. Procédé de séparation de particules solides contenues dans une suspension gaz solide utilisant le dispositif selon l'une quelconque des revendications 1 à 5, dans lequel la suspension gaz solide est introduite dans la conduite verticale (18) où elle s'écoule en écoulement vertical ascendant, puis rentre dans la zone de centrifugation (19) par la section de passage (4) où elle effectue une rotation d'environ 180° de manière à permettre le désengagement du gaz, majoritairement évacué par l'ouverture (6), les particules solides effectuant un mouvement vertical descendant au travers de la zone verticale descendante (20), et étant évacuées vers la partie inférieure de l'enceinte de régénération (25) par la section de sortie (5).

10. Procédé de séparation de particules solides contenues dans une suspension gaz solide utilisant le dispositif selon l'une quelconque des revendications 1 à 5, dans lequel le flux de catalyseur à travers la section de sortie (5) est compris entre 50 et 1500 Kgl(m².s), et préférentiellement compris entre 100 Kg/(m².s) et 500 Kg/(m².s).

## Claims

1. Device for separating solid particles contained in a gas stream coming from the regeneration zone of a fluid catalytic cracking (FCC) unit bounded by an inner envelope (3) of cylindrical shape centred about the vertical axis (11) of the regeneration zone (25), and an outer envelope (1) that has one approximately horizontal wall (15), one curvilinear wall (16), and one approximately vertical wall (17), the set of said walls (15, 16, 17) covering the inner envelope (3) and forming a set of separation chambers (2) distributed in radial chapels around the inner envelope (3) in which the gas/solid suspension to be separated circulates, each separation chamber (2) communicating, on the one hand, via the inlet sections (4) with the inner cylindrical envelope (3) and, on the other hand, via the outlet sections (5) with the lower part of the regeneration zone (25) and having at least one side outlet (6) located in the upper part of the side wall (22) of the separation chamber (2), said side outlet (6) being defined by the space between the portion of the vertical wall of the inner envelope (3) located immediately below the inlet section (4) and the intrados (26) corresponding to the curvilinear wall (16) of the outer envelope (1), said device having baffles (7) that are located between two successive separation chambers (2), each baffle (7) having at least an opening located at its lower part and being fixed to the wall of the inner cylindrical envelope (3), each baffle (7) having an upwardly pointing wing shape, the upper end of the wing being located at a level below the upper level of the side opening (16), and the return legs (8) of the cyclones (21) forming the secondary separation stage, are inserted between the separation chambers (2), and are aligned in a circle having a diameter between the diameter of the inner cylindrical envelope (3) and the larger diameter of the outer envelope (1).

2. Device according to any one of claims 1, in which each baffle (7) has a lower inclined part fixed to the wall of the inner cylindrical envelope (3), the angle of inclination being between 15 and 30 degrees relative to the vertical.

3. Device according to any one of Claims 1 to 2, in which each baffle (7) has an upper, approximately vertical part located at at least 150 mm with respect to the vertical wall of the inner cylindrical envelope (3).

4. Device according to any one of Claims 1 to 3, in which the separation chambers (2), the baffles (7) and the return legs (8) of the cyclones are 2 or 4, and they form an assembly that respects the symmetry about the vertical axis (11) of the regeneration zone (25).

5. Device according to one of Claims 1 to 4, in which the level of the dense fluidized bed located in the lower part of the regeneration zone (25) is at least one metre lower than the level of the outlet sections (5).

6. Process for separating solid particles contained in a gas/solid suspension using the device according to any one of Claims 1 to 5, in which the circulation rate of the gas/solid suspension in the inlet sections (4) is between 5 m/s and 30 m/s, and preferably between 8 m/s and 20 m/s.

7. Process for separating solid particles contained in a gas/solid suspension using the device according to any one of Claims 1 to 5, in which the mass flow rate ratio of the solid to the gas at the inlet sections (4) is between 2 to 40, and preferably between 4 to 25.

8. Process for separating solid particles contained in a gas/solid suspension using the device according to any one of Claims 1 to 5, in which the gas outlet rate at the side openings (6) is between 5 to 30 m/s, and preferably between 5 m/s to 12 m/s.

9. Process for separating solid particles contained in a gas/solid suspension using the device according to any one of Claims 1 to 8, in which the gas/solid suspension is introduced into the vertical pipe (18) where it flows with vertical ascending flow, then enters into the centrifuging zone (19) via the flow area (4) where it rotates around 180° so as to enable the disengagement of the gas, which is mainly discharged via the opening (6), the solid particles moving vertical downwards through the vertical descending zone (20), and being discharged towards the lower part of the regeneration chamber (25) via the outlet section (5).

10. Process for separating solid particles contained in a gas/solid suspension using the device according to any one of Claims 1 to 5, in which the catalyst flow rate through the outlet section (5) is between 50 to 1500 kg/(m².s), and preferably between 100 kg/(m².s) to 500 kg/(m².s).

## Patentansprüche

1. Vorrichtung zur Abtrennung feststofflicher Partikel, die in einem Gasstrom enthalten sind, welcher aus dem Regenerierungsbereich einer Fließbett-Einheit zum katalytischen Cracken (FCC) stammt, begrenzt von einer inneren Hülle (3) von im wesentlichen zylindrischer Form, die mittig auf die Vertikalachse (11) des Regenerierungsbereichs (25) ausgerichtet ist, und einer äußeren Hülle (1), die eine im Wesentlichen horizontale Wand (15), eine gekrümmte Wand (16) und eine im Wesentlichen vertikale Wand (17) aufweist, wobei die Gesamtheit dieser Wände (15, 16, 17) die innere Hülle bedecken und eine Gesamtheit von Trennkammern (2) bilden, die kapellenartig um die innere Hülle (3) verteilt sind, wobei darin die zu trennende Gas-Feststoff-Suspension strömt, wobei jede der Trennkammern (2) einerseits über die Eintrittssektionen (4) mit der inneren zylindrischen Hülle (3) und andererseits über die Austrittssektionen (5) mit dem unteren Abschnitt des Regenerierungsbereichs (25) in Verbindung steht und mindestens eine seitliche Austrittsöffnung (6) besitzt, welche sich im oberen Abschnitt der Seitenwand (22) der Trennkammer (2) befindet, wobei die seitliche Austrittsöffnung (6) von dem Raum begrenzt wird, der zwischen dem Teilstück der vertikalen Wand der Trennkammer (3), welches sich unmittelbar unter der Eintrittssektion (4) befindet, und der inneren Wölbungsfläche (26), welche der gekrümmten Wand (16) der äußeren Hülle (1) entspricht, gelegen ist, wobei die Vorrichtung darüber hinaus Ablenkplatten (7) aufweist, die sich zwischen zwei aufeinander folgenden Trennkammern (2) befinden, wobei jede der Ablenkplatten (7) mit mindestens einer Öffnung versehen ist, die sich in dessen unterem Abschnitt befindet, und an der Wand der inneren zylindrischen Hülle (3) befestigt ist, wobei jede der Ablenkplatten (7) die Form eines nach oben gerichteten Flügels hat, wobei das obere Ende des Flügels sich auf einer Höhe befindet, die niedriger als die obere Höhe der seitlichen Öffnung (16) ist, und wobei die Rückförderelemente (8) der Zyklone (21), welche die zweite Trennstufe darstellen, sich zwischen den Trennkammern (2) befinden und sich derart ausrichten, dass sie einen Kreis beschreiben, dessen Durchmesser zwischen dem Durchmesser der inneren zylindrischen Hülle (3) und dem größten Durchmesser der äußeren Hülle (1) liegt.

2. Vorrichtung nach Anspruch 1, wobei jede der Ablenkplatten (7) einen geneigten unteren Abschnitt besitzt, der an der Wand der inneren zylindrischen Hülle (3) befestigt ist, wobei der Neigungswinkel im Bereich von 15 bis 30 Grad unter Bezugnahme auf die Vertikale liegt.

3. Vorrichtung nach einem der Ansprüche 1 bis 2, wobei jede der Ablenkplatten (7) einen im Wesentlichen vertikalen oberen Abschnitt besitzt, der sich mindestens 150 mm von der vertikalen Wand der inneren zylindrischen Hülle (3) entfernt befindet.

4. Vorrichtung nach einem der Ansprüche 1 bis 3, wobei die Anzahl der Trennkammern (2), der Ablenkplatten (7) und der Rückförderelemente (8) der Zyklone 2 oder 4 beträgt und diese eine Gesamteinheit bilden, die gemäß der vertikalen Achse (11) des Regenerierungsbereichs (25) symmetrisch ist.

5. Vorrichtung nach einem der Ansprüche 1 bis 4, wobei die Höhe des dichten Fließbetts, welches sich im unteren Abschnitt des Regenerierungsbereichs (25) befindet, um mindestens einen Meter niedriger als die Höhe der Austrittssektionen (5) ist.

6. Verfahren zum Abtrennen feststofflicher Partikel, die in einer Gas-Feststoff-Suspension enthalten sind, wobei die Vorrichtung gemäß einem beliebigen der Ansprüche 1 bis 5 zur Anwendung kommt, wobei die Strömungsgeschwindigkeit der Gas-Feststoff-Suspension in den Eintrittssektionen (4) im Bereich von 5 m/s bis 30 m/s, und vorzugsweise im Bereich von 8 m/s bis 20 m/s, liegt.

7. Verfahren zum Abtrennen feststofflicher Partikel, die in einer Gas-Feststoff-Suspension enthalten sind, wobei die Vorrichtung gemäß einem beliebigen der Ansprüche 1 bis 5 zur Anwendung kommt, wobei das Massendurchsatz-Verhältnis zwischen dem Feststoff und dem Gas auf Höhe der Eintrittssektionen (4) im Bereich von 4 bis 40, und vorzugsweise im Bereich von 4 bis 25, liegt.

8. Verfahren zum Abtrennen feststofflicher Partikel, die in einer Gas-Feststoff-Suspension enthalten sind, wobei die Vorrichtung gemäß einem beliebigen der Ansprüche 1 bis 5 zur Anwendung kommt, wobei die Gasaustrittsgeschwindigkeit auf Höhe der seitlichen Öffnungen (6) im Bereich von 5 m/s bis 30 m/s, und vorzugsweise im Bereich von 5 m/s bis 12 m/s, liegt.

9. Verfahren zum Abtrennen feststofflicher Partikel, die in einer Gas-Feststoff-Suspension enthalten sind, wobei die Vorrichtung gemäß einem beliebigen der Ansprüche 1 bis 5 zur Anwendung kommt, wobei die Gas-Feststoff-Suspension in die vertikale Leitung (18) eingeleitet wird, wo sie gemäß einer aufsteigenden Vertikalströmung fließt, woraufhin sie über die Durchgangssektion (4) in den Zentrifugationsbereich (19) gelangt, wo sie derart eine Drehung um ungefähr 180° erfährt, dass ein Abscheiden des Gases ermöglicht wird, welches überwiegend durch die Öffnung (6) abgeführt wird, wobei die feststofflichen Partikel eine vertikale Abwärtsbewegung durch den vertikalen Sinkbereich (20) ausführen und über die Austrittssektion (5) in Richtung des unteren Abschnitts des Regenerierungsraums (25) abgeführt werden.

10. Verfahren zum Abtrennen feststofflicher Partikel, die in einer Gas-Feststoff-Suspension enthalten sind, wobei die Vorrichtung gemäß einem beliebigen der Ansprüche 1 bis 5 zur Anwendung kommt, wobei die Katalysatorströmung durch die Austrittssektion (5) im Bereich von 50 bis 1.500 Kg/(m².s), und vorzugsweise im Bereich von 100 Kg/(m².s) bis 500 Kg/(m².s), liegt.
